# EUROPÄISCHE PATENTSCHRIFT

(11) **EP 2 508 280 B1**
(45) Veröffentlichungstag und Bekanntmachung des Hinweises auf die Patenterteilung: **18.01.2017**
(21) Anmeldenummer: 12002403.9
(22) Anmeldetag: 03.04.2012
(51) Int. Cl.: B23B 3/16, B23Q 1/01, B23Q 11/00

(54) **Drehmaschine**
Lathe
Tour

(30) Priorität: 07.04.2011 DE 102011016288
(43) Veröffentlichungstag der Anmeldung: 10.10.2012
(73) Patentinhaber: Gildemeister Drehmaschinen GmbH, 33689 Bielefeld (DE)
(72) Erfinder: Plöger, Werner, 32832 Augustdorf (DE)
(74) Vertreter: Schober, Mirko

(56) Entgegenhaltungen:
- EP-A2- 0 093 800
- EP-A2- 1 180 412
- WO-A1-2005/080048
- CH-A5- 602 454
- DE-A1- 3 909 292
- DE-A1- 4 441 106

## Beschreibung

Die Erfindung betrifft eine Drehmaschine nach dem Oberbegriff des Anspruchs 1.

Bei Drehmaschinen besteht grundsätzlich wie bei allen spanabhebenden Werkzeugmaschinen das Problem der Späneabfuhr. Maschinen der in Rede stehenden Art weisen ein Maschinenbett auf, aus dem ein Spindelkasten hervortritt, in dem eine Spindel zur Aufnahme des zu bearbeitenden Werkstücks gelagert ist. Die Späne entstehen bei der Bearbeitung in dem Raumbereich oberhalb des Maschinenbetts und können sich dabei auf diesem verteilen, je nachdem, wie genau die Spanabhebung erfolgt und welchen Impuls die von dem rotierenden Werkstück weg fliegenden Späne erhalten. Bei konventionellen Drehmaschinen ist es daher üblich, Durchlässe, sogenannte Spänetunnel, im Maschinenbett vorzusehen, die den Raumbereich oberhalb des Maschinenbetts, in dem die Späne entstehen, mit einem Bereich unterhalb des Maschinenbetts verbinden, in welchem eine Sammlung oder Abfuhr der Späne erfolgt. Derartige Spänetunnel sind beispielsweise in der DE 33 44 063 A1 offenbart.

WO 2005/080048 A1 offenbart eine Drehmaschine mit den Merkmalen des Oberbegriffs des Anspruchs 1.

Bei einer Drehmaschine mit schräg geneigtem oder senkrechtem Maschinenbett werden die Späne oberhalb oder vor der dem Arbeitsraum zugewandten Oberfläche des Maschinenbettes abgeführt. Oberhalb meint in Bezug auf das Maschinenbett eine Position, von der aus ein herabfallender Span auf dem Maschinenbett landet. Unter einem schräg geneigten oder senkrechten Maschinenbett ist auch ein Bett zu verstehen, bei dem lediglich die Abdeckung des Bettes im Bereich des Arbeitsraums eine schräge oder senkrechte Neigung aufweist, das Maschinenbett selbst aber eine Oberfläche mit davon abweichende Neigung besitzt.

Der aus dem Maschinenbett hervortretende Spindelkasten, der einen Raumbereich oberhalb des Maschinenbettes bzw. vor dem Maschinenbett in zwei Zonen beiderseits der Spindelachse teilt, stellt für den Spänefall eine Barriere dar, die eine Abfuhr von Spänen aus der oberhalb des Spindelkastens gelegenen Bereich verhindert. Dies jedenfalls dann, wenn der Bereich oberhalb des Spindelkastens wenigstens teilweise zum Arbeitsraum gehört, so dass Späne in diesen Bereich gelangen können.

Der Erfindung liegt daher die Aufgabe zugrunde, eine Drehmaschine anzugeben, bei der die Begünstigung von Spananhäufungen durch den Spindelkasten nicht oder zumindest in geringerem Maße stattfindet.

Die Aufgabe wird gelöst durch eine Drehmaschine mit den Merkmalen des Anspruchs 1. Die Merkmale der Unteransprüche betreffen vorteilhafte Ausführungsformen.

Erfindungsgemäß wird die Aufgabe dadurch gelöst, dass die Drehmaschine wenigstens einen, den Durchtritt von Spänen ermöglichenden, vorteilhafterweise quer zur Spindelachse verlaufenden, Durchlass im Bereich zwischen der Spindel und dem Maschinenbett aufweist, welcher beide durch den aus dem Maschinenbett hervortretenden Spindelkasten getrennte Zonen des Raumbereichs oberhalb des Maschinenbetts verbindet. Die Zonen des Raumbereichs sind dabei nicht als abgetrennte Räume zu verstehen, sondern es kann sich durchaus um offen gestaltete Raumbereiche handeln, d.h. die beiden Zonen müssen auch nicht hermetisch voneinander getrennt sein. Es reicht, wenn der Spindelkasten eine Barriere zwischen zwei räumlich ausgedehnten Zonen des bei der Bearbeitung für Späne zugänglichen Raumbereichs oberhalb des Maschinenbetts bildet, die einer direkten Verbindung der beiden Zonen auf kürzestem Weg als Hindernis entgegen steht.

Der erfindungsgemäße Durchlass muss diese beiden Zonen verbinden und so eine direktere, d.h. kürzere Verbindung zwischen den beiden Zonen ermöglichen. Weiterhin muss der Durchlass den Durchtritt von Spänen ermöglichen, d.h. er muss so dimensioniert sein, dass er von Spänen passiert werden kann. Diese Anforderung ist dabei nicht so zu verstehen, dass spiralige Einzelspäne großer Länge, wie sie zuweilen bei der Drehbearbeitung entstehen, immer durch den Durchlass passen müssen. Vielmehr wird es in der Praxis in der Regel ausreichend sein, den erfindungsgemäßen Effekt bei kleinen, kurzbrechenden Spänen, wie sie beispielsweise bei der Bearbeitung von Automatenstählen entstehen, zu erzielen, da diese insbesondere bei der weitgehend automatisierten Bearbeitung am häufigsten auftreten und angestrebt werden, also Späne mit tendenziell niedriger Spanraumzahl.

Erfindungsgemäß ist der Durchlass im Gehäuse des Spindelkastens vorgesehen.

Vorzugsweise verlaufen die Durchlässe quer zur Spindelachse. Dann erlaubt die Orientierung der Durchlässe quer zur Spindelachse einen kurzen Durchtrittsweg für Späne zwischen zwei Zonen, von denen die eine höher liegt als die andere. Aufgrund dieses Höhenunterschieds ist eine Triebkraft für den Durchtritt der Späne gegeben.

Die Zonen beiderseits des Spindelkastens können vorteilhafterweise für die Anordnung von Führungen für Maschinenaggregate genutzt werden, d. h. durch die erfindungsgemäßen Durchlässe stehen größere Flächen des Maschinenbetts für Führungen zur Verfügung, ohne dass die Spanabfuhr dadurch in nicht mehr vertretbarem Maße eingeschränkt wird.

Vorteilhafterweise können die Maschinenaggregate dann so ausgelegt werden, dass sie in die vom Spindelkasten getrennten Zonen zumindest teilweise eintauchen können. Hierdurch wird ein größerer Bewegungsspielraum der Maschinenaggregate ermöglicht. Vorteilhafterweise werden Führungsabdeckungen eingesetzt, die die Führungen selbst vor Spänen schützen. Diese bestehen in der Regel aus lamellenartig ineinander verschieblichen Elementen und stellen einen wirkungsvollen Schutz der Führungen vor den Spänen dar, wobei sich vorzugsweise die Führungsabdeckungen an die maschinenbettseitigen Begrenzungen der Durchlässe anschließen, so dass die Späne den Übergang von Führungsabdeckung zu Durchlass und Durchlass zu Führungsabdeckung möglichst ungehindert passieren können. Vorzugsweise bildet dabei die den Arbeitsraum zum Maschinenbett hin begrenzende Oberfläche eine zumindest im Wesentlichen ebene Fläche, so dass sich ein ungehindertes Abgleiten der Späne ergibt.

Vorzugsweise weist dabei der mindestens eine Durchlass die Gestalt eines Tunnels auf. Dabei ist es besonders vorteilhaft, den Tunnel abschüssig zu gestalten, um einen möglichst effektiven Spänetransport zu ermöglichen. Dabei ergibt sich vorteilhafterweise durch den mindestens einen Durchlass ein Durchtrittsweg für Späne mit einem stetigen Gefälle zwischen den zwei Zonen beidseits der Spindelachse, zwischen denen die Späne transportiert werden sollen.

Vorteilhafterweise sind für die Befestigung des Spindelkastens an dem Maschinenbett in einer Innenfläche des mindestens einen Durchlasses Durchbrüche, insbesondere Bohrungen vorgesehen. Diese können für die Befestigung des Spindelkastens mit geeigneten Befestigungselementen, beispielsweise Schrauben, verwendet werden und sind vorzugsweise in der dem Maschinenbett zugewandten Innenfläche des Durchlasses vorgesehen.

Vorteilhafterweise kann eine Mehrzahl Durchlässe entlang der zur Spindelachse parallelen Richtung verteilt werden. Die Durchlässe sind dabei durch massive Bereiche getrennt, die beispielsweise nach der Art von Rippen ausgebildet sein können, was zu einer im Vergleich zu einem einzigen großflächigen Durchlass signifikanten Versteifung des Spindelkastens beiträgt.

Ebenso vorteilhaft in Bezug auf die Steifigkeit des Spindelkastens ist, wenn dieser an mindestens zwei voneinander in einer von der Richtung der Spindelachse verschiedenen und vorzugsweise zu dieser senkrechten Richtung beabstandeten Bereichen am Maschinenbett befestigt ist. Insbesondere die Aufnahme der am Spindelkasten durch die Erarbeitung entstehenden Drehmomente wird durch eine derartige Befestigung verbessert. Eine derartige Befestigung kann realisiert werden, indem der Spindelkasten einen Teil des Maschinenbetts überspannt. Dabei ist er vorzugsweise brückenartig ausgebildet, so dass unter ihm ein großflächiger Freiraum zwischen dem Maschinenbett und dem Spindelkasten gebildet wird. Dabei ist es vorteilhaft, dass dieser das Maschinenbett überspannende Teil des Spindelkastens sich nicht über die volle Ausdehnung des Spindelkastens in Richtung der Spindelachse erstreckt. Zur Lagerung der Spindel wird ein Spindelkasten einer gewissen Länge benötigt, nicht jedoch für die vorteilhafte Befestigung an zwei beabstandeten Bereichen. Durch die Verkürzung des brückenartigen Auslegers wird vielmehr seitlich des die Spindel aufnehmenden Teils des Spindelkastens ein freier Bereich geschaffen, der beispielsweise für den Verfahrweg eines Maschinenaggregats benutzt werden kann.

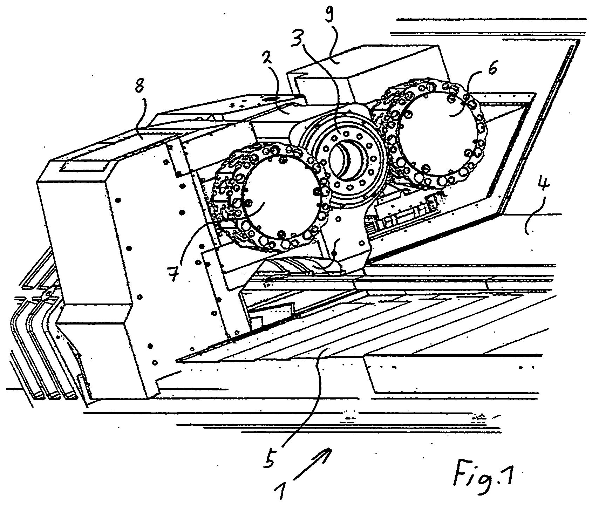

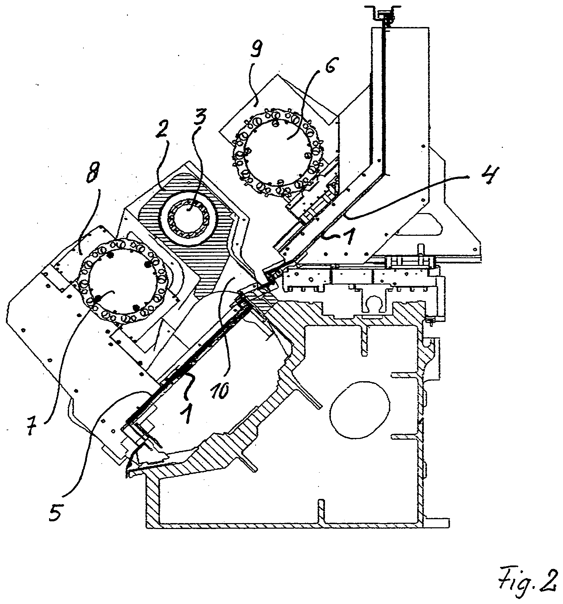

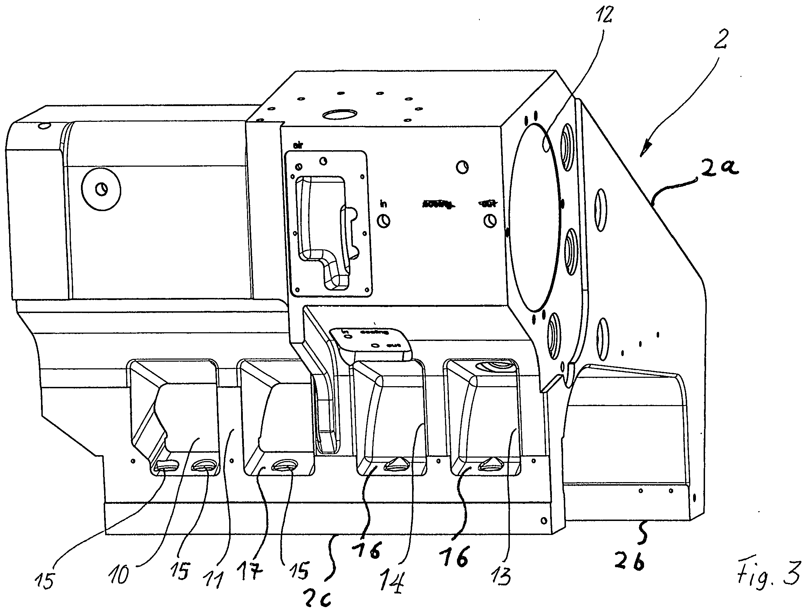

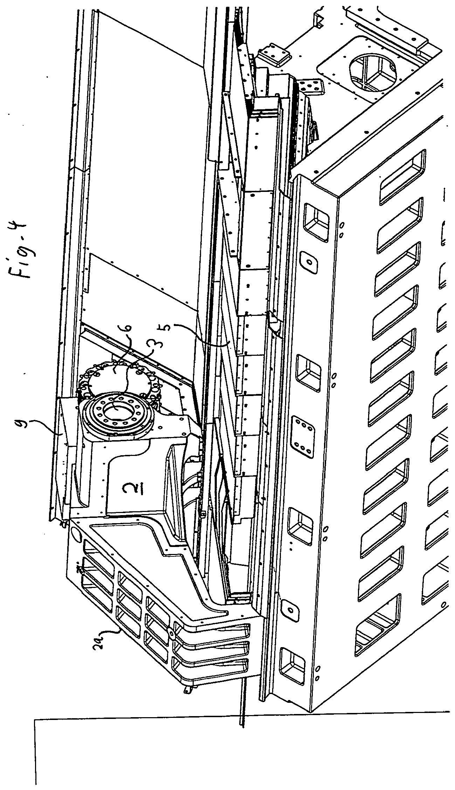

Die Erfindung wird im Folgenden anhand der Figuren 1 bis 4 schematisch näher erläutert. Es zeigen:
- Figur 1 -: einen Ausschnitt einer beispielhaften erfindungsgemäßen Drehmaschine,
- Figur 2 -: eine Schnittdarstellung einer beispielhaften erfindungsgemäßen Drehmaschine,
- Figur 3 -: einen Spindelkasten einer beispielhaften erfindungsgemäßen Drehmaschine,
- Figur 4 -: einen Teil einer beispielhaften erfindungsgemäßen Drehmaschine, bei dem ein Maschinenaggregat zum Zweck der besseren Sichtbarkeit des Spindelkastens nicht und die Maschine gekippt dargestellt ist.

Die Spindel 3 der beispielhaften erfindungsgemäßen Drehmaschine ist in dem Spindelkasten 2 aufgenommen. Der Spindelkasten 2 ist auf dem Maschinenbett 1 an zwei Bereichen 2b und 2c befestigt. Da der am Maschinenbett 1 befestigte Spindelkasten 2 aus dem Maschinenbett 1 hervortritt, stellt er eine Barriere für an dem Maschinenbett 1 herab gleitende Späne dar. Durch die erfindungsgemäßen Durchlässe 10, die von den Rippen 11 voneinander getrennt werden, können die Späne durch den Spindelkasten 2 hindurch treten und so von dem beispielhaft schräg gestellten Maschinenbett 1 allein aufgrund der Schwerkraftwirkung abgleiten. Dabei treten sie beim Passieren der quer zur Spindelachse X verlaufenden Durchlässe 10 von einer höher gelegenen Zone des Raumbereichs oberhalb des Maschinenbetts 1 kommend in eine tiefer gelegene Zone des Raumbereichs oberhalb des Maschinenbetts 1 ein.

Beidseits des Spindelkastens 2 weist die beispielhafte erfindungsgemäße Drehmaschine zwei Maschinenaggregate 9 und 8 auf, an denen im gezeigten Beispiel die Werkzeugrevolver 6 und 7 aufgenommen sind. Diese sind auf Führungen gelagert, welche die Bewegung der Maschinenaggregate in Arbeitsraumbereiche neben dem Spindelkasten 2 ermöglichen. Die Führungen sind durch die teleskopartigen Führungsabdeckungen 4 und 5 vor den Spänen geschützt.

Der gezeigte beispielhafte Spindelkasten 2 überspannt brückenartig einen Teil des Maschinenbetts 1, wobei der brückenartig ausgebildete Teil 2a sich nicht über die gesamte Länge des Spindelkastens 2 entlang der Richtung der Spindelachse X erstreckt. Die maschinenbettseitigen Innenflächen 17 der Durchlässe weisen dabei Durchbrüche 15 in Form von Bohrungen auf, die zur Befestigung des Spindelkastens 2 genutzt werden können. Neben den erfindungsgemäßen Durchlässen 10 weist der erfindungsgemäße beispielhafte Spindelkasten 2 in dem Bereich, der von der Spanproduktion weiter abgelegen ist und somit unkritischer, statt der Durchlässe 10 Vertiefungen 14 und 13 auf, die ebenfalls maschinenbettseitige Innenflächen 16 aufweisen, die zur Befestigung des Spindelkastens 2 am Maschinenbett 1 genutzt werden können. Der gezeigte beispielhafte Spindelkasten 2 ist über seine gesamte Länge von einer Aufnahmebohrung 12 für die Aufnahme der Spindel 3 durchsetzt.

## Patentansprüche

1. Drehmaschine, ein schräg geneigtes oder senkrechtes Maschinenbett (1) und eine in einem Spindelkasten (2) gelagerte Spindel (3) mit einer Spindelachse (X) aufweisend, wobei der Spindelkasten (2) aus dem Maschinenbett hervortritt und einen an eine Oberfläche des Maschinenbetts (1) in Richtung des Arbeitsraums angrenzenden Raumbereich in eine höher gelegene und eine tiefer gelegene Zone beiderseits der Spindelachse (X) teilt,
**dadurch gekennzeichnet,**
**dass** die Drehmaschine wenigstens einen den Durchtritt von Spänen ermöglichenden Durchlass (10) im Bereich zwischen der Spindel (3) und dem Maschinenbett (1) aufweist, welcher beide Zonen verbindet, wobei der Durchlass (10) im Gehäuse des Spindelkastens (2) vorgesehen ist.

2. Drehmaschine nach Anspruch 1,
**dadurch gekennzeichnet,**
**dass** eine den Arbeitsraum zum Maschinenbett (1) hin begrenzende Oberfläche ein Gefälle in einer von der Richtung der Spindelachse (X) verschiedenen Richtung, insbesondere ein zum Spindelkasten (2) hin abfallendes Gefälle aufweist.

3. Drehmaschine nach Anspruch 1 oder 2,
**dadurch gekennzeichnet,**
**dass** das Maschinenbett (1) vorzugsweise in Richtung der Spindelachse (X) verlaufende Führungen für Machinenaggregate aufweist.

4. Drehmaschine nach einem der vorherigen Ansprüche,
**dadurch gekennzeichnet,**
**dass** mindestens ein Maschinenaggregat in eine der durch den Spindelkasten (2) getrennten Zonen zumindest teilweise eintauchen kann.

5. Drehmaschine nach einem der vorherigen Ansprüche,
**dadurch gekennzeichnet,**
**dass** die Drehmaschine eine Mehrzahl entlang der Richtung parallel zu der Spindelachse (X) verteilte Durchlässe aufweist.

6. Drehmaschine nach einem der vorherigen Ansprüche,
**dadurch gekennzeichnet,**
**dass** der Spindelkasten (2) an mindestens zwei voneinander in einer von der Richtung der Spindelachse (X) verschiedenen, vorzugsweise zu dieser senkrechten Richtung beabstandeten Bereichen (2b, 2c) am Maschinenbett befestigt ist.

7. Drehmaschine nach einem der vorherigen Ansprüche,
**dadurch gekennzeichnet,**
**dass** der Spindelkasten (2) einen Teil des Maschinenbetts (1) vorzugsweise brückenartig überspannt, wobei vorzugsweise der einen Teil des Maschinenbetts überspannende Teil (2a) des Spindelkastens (2) sich nicht über die volle Ausdehnung des Spindelkastens (2) in Richtung der Spindelachse (X) erstreckt.

8. Drehmaschine nach einem der vorherigen Ansprüche,
**dadurch gekennzeichnet,**
**dass** das Maschinenbett (1) eine Führungsabdeckung (4, 5) aufweist, die sich vorzugsweise an die maschinenbettseitige Innenfläche des mindestens einen Durchlasses (10) anschließt.

9. Drehmaschine nach einem der vorherigen Ansprüche,
**dadurch gekennzeichnet,**
**dass** Durchbrüche (15), insbesondere Bohrungen, für die Befestigung des Spindelkastens (2) an dem Maschinenbett (1) in einer vorzugsweise der maschinenbettseitigen Innenfläche (17) des mindestens einen Durchlasses (10) enden.

10. Drehmaschine nach einem der vorherigen Ansprüche,
**dadurch gekennzeichnet,**
**dass** der mindestens eine Durchlass (10) die Gestalt eines vorzugsweise abschüssigen Tunnels aufweist.

11. Drehmaschine nach einem der vorherigen Ansprüche,
**dadurch gekennzeichnet,**
**dass** sich durch den mindestens einen Durchlass (10) ein Durchtrittsweg für Späne mit stetigem Gefälle zwischen den zwei Zonen beidseits der Spindelachse (X) ergibt.

12. Drehmaschine nach einem der vorigen Ansprüche,
**dadurch gekennzeichnet,**
**dass** das Maschinenbett (1) eine zumindest im Wesentlichen ebene Fläche bildet.

13. Drehmaschine nach einem der vorigen Ansprüche,
**dadurch gekennzeichnet,**
**dass** der wenigstens eine Durchlass (10) im Gehäuse und/oder einem aus dem Maschinenbett (1) hervortretenden Sockel des Spindelkastens (2) vorgesehen ist.

14. Drehmaschine nach einem der vorigen Ansprüche,
**dadurch gekennzeichnet,**
**dass** der wenigstens eine Durchlass (10) quer zur Spindelachse verläuft.

## Claims

1. Lathe, comprising an obliquely inclined or vertical machine bed (1) and a spindle (3) with a spindle axis (X) mounted in a headstock (2), wherein the headstock (2) projects out from the machine bed and divides a spatial area adjoining a surface of the machine bed (1) in the direction of the work chamber, into a higher zone and a lower zone either side of the spindle axis (X),
**characterised in that**
the lathe has at least one port (10) in the region between the spindle (3) and the machine bed (1) which allows chippings to pass through and which connects the two zones wherein the port (10) is provided in the housing of the headstock (2).

2. Lathe according to claim 1
**characterised in that**
a surface defining the work chamber from the machine bed (1) has a slope in a direction which is different from the direction of the spindle axis (X), more particularly a slope dropping down towards the headstock (2) .

3. Lathe according to claim 1 or 2
**characterised in that**
the machine bed (1) has guides preferably running in the direction of the spindle axis (X) for the machine assemblies.

4. Lathe according to one of the preceding claims
**characterised in that**
at least one machine assembly can project at least partially into one of the zones separated by the headstock (2).

5. Lathe according to one of the preceding claims
**characterised in that**
the lathe has a plurality of ports spread out along the direction parallel to the spindle axis (X).

6. Lathe according to one of the preceding claims
**characterised in that**
the headstock (2) is fastened on the machine bed at at least two regions (2b, 2c) which are spaced from one another in a direction which is different from the direction of the spindle axis (X), preferably a direction perpendicular thereto.

7. Lathe according to one of the preceding claims
**characterised in that**
the headstock (2) spans a part of the machine bed (1) preferably in the manner of a bridge, wherein the part (2a) of the headstock (2) spanning a part of the machine bed does not extend over the full extension of the headstock (2) in the direction of the spindle axis (X).

8. Lathe according to one of the preceding claims
**characterised in that**
the machine bed (1) has a guide cover (4, 5) which preferably adjoins the inside face of the at least one port (10) on the machine bed side.

9. Lathe according to one of the preceding claims
**characterised in that**
apertures (15), more particularly bores, for fastening the headstock (2) on the machine bed (1) end in a preferably inside face (17) of the at least one port (10) on the machine bed side.

10. Lathe according to one of the preceding claims
**characterised in that**
the at least one port (10) has the configuration of a preferably steep tunnel.

11. Lathe according to one of the preceding claims
**characterised in that**
a through passage for the chippings is provided by the at least one port (10) with a continuous drop between two zones either side of the spindle axis (X).

12. Lathe according to one of the preceding claims
**characterised in that**
the machine bed (1) forms an at least substantially flat surface.

13. Lathe according to one of the preceding claims
**characterised in that**
the at least one port (10) is provided in the housing and/or a plinth of the headstock (2) protruding from the machine bed (1).

14. Lathe according to one of the preceding claims
**characterised in that**
the at least one port (10) runs transversely to the spindle axis.

## Revendications

1. Tour présentant un banc de machine (1), oblique ou vertical et une broche (3), montée dans une boîte de broche (2), avec un axe de broche (X), sachant que la boîte de broche (2) fait saillie hors du banc de la machine (1) et divise un espace, adjacent à une surface du banc de la machine (1) dans la direction de l'espace de travail, en une zone plus élevée et en une zone plus basse, des deux côtés de l'axe (X) de la broche,
**caractérisé en ce que**
le tour présente, entre la broche (3) et le banc de la machine (1), au moins un passage (10), qui, permettant l'écoulement des copeaux, relie les deux zones, sachant que le passage (10) est prévu dans la boîte de broche (2).

2. Tour selon la revendication 1,
**caractérisé en ce qu'**
une surface, qui limite l'espace de travail vers la banc de la machine (1), présente une pente dans une direction qui diffère de le direction de l'axe (X) de la broche, en particulier une pente qui descend vers la boîte de broche (2).

3. Tour selon revendication 1 ou 2,
**caractérisé en ce que**
le banc de la machine (1) présente des guides de groupes de machines qui s'étendent de préférence dans la direction de l'axe (X) de la broche.

4. Tour selon l'une des revendications précédentes,
**caractérisé en ce qu'**
au moins un groupe de machines peut pénétrer, au moins partiellement, dans l'une des zones séparées par la boîte de broche (2)).

5. Tour selon l'une des revendications précédentes,
**caractérisé en ce que**
le tour présente une pluralité de passages qui sont répartis le long de la direction parallèle à l'axe (X) de la broche.

6. Tour selon l'une des revendications précédentes
**caractérisé en ce que**
la boîte de broche (2) est fixée sur le banc de la machine, dans au moins deux sections (2b, 2c) distancées l'une de l'autre dans une direction qui diffère de la direction de l'axe (X) de la broche, de préférence perpendiculaire à celle-ci.

7. Tour selon l'une des revendications précédentes,
**caractérisé en ce que**
la boîte de broche (2) recouvre, de préférence en forme de pont, une partie du banc de la machine (1), sachant que la partie (2a) de la boîte de broche (2), qui recouvre une partie du banc de la machine, ne s'étend par sur toute l'étendue de la boîte de broche (2) dans la direction de l'axe (X) de la broche.

8. Tour selon l'une des revendications précédentes,
**caractérisé en ce que**
le banc de la machine (1) présente un recouvrement de guidage (4, 5), qui, de préférence, se raccorde à la face interne, côté banc de la machine, du passage (10) au moins prévu.

9. Tour selon l'une des revendications précédentes,
**caractérisé en ce que**
des jours (15), en particulier des alésages, pour la fixation de la boîte de broche (2) sur le banc de la machine (1), se terminent dans une face interne (17) du passage (10) au moins prévu, de préférence côté banc de la machine.

10. Tour selon l'une des revendications précédentes,
**caractérisé en ce que**
le passage (10) au moins prévu présente la forme d'un tunnel de préférence en pente.

11. Tour selon l'une des revendications précédentes,
**caractérisé en ce qu'**
une voie d'écoulement de copeaux, en pente constante entre les deux zones, des deux côtés de l'axe (X) de la broche, résulte du passage (10) au moins prévu.

12. Tour selon l'une des revendications précédentes,
**caractérisé en ce que**
le banc de la machine (1) forme une surface au moins sensiblement plane.

13. Tour selon l'une des revendications précédentes,
**caractérisé en ce que**
le passage (10) au moins prévu est disposé dans le bolitier et / ou dans un socle de la boîte de broche (2) faisant saillie hors du banc de la machine (1).

14. Tour selon l'une des revendications précédentes,
**caractérisé en ce que**
le passage (10) au moins prévu s'étend transversalement par rapport à l'axe de la broche.
